# EUROPÄISCHE PATENTSCHRIFT

(11) **EP 2 845 277 B1**
(45) Veröffentlichungstag und Bekanntmachung des Hinweises auf die Patenterteilung: **28.12.2016**
(21) Anmeldenummer: 13719866.9
(22) Anmeldetag: 02.05.2013
(51) Int. Cl.: H02G 3/08, H02G 3/18, H02G 15/007, F16L 5/14, H02G 15/013

(54) **DURCHFÜHRUNGSGEHÄUSE**
BUSHING HOUSING
BOÎTIER DE TRAVERSÉE

(30) Priorität: 03.05.2012 DE 202012101639 U
(43) Veröffentlichungstag der Anmeldung: 11.03.2015
(73) Patentinhaber: Weidmüller Interface GmbH & Co. KG, 32758 Detmold (DE)
(72) Erfinder: HEGGEMANN, Christian, 32758 Detmold (DE); BAUERKÄMPER, Dirk, 32791 Lage (DE); SCHLINGMANN, Hans, 32805 Horn-Bad Meinberg (DE)
(74) Vertreter: Specht, Peter
(86) Internationale Anmeldenummer: PCT/EP2013/059181
(87) Internationale Veröffentlichungsnummer: WO 2013/164420

(56) Entgegenhaltungen:
- EP-A1- 0 713 277
- WO-A1-2009/005416
- DE-A1- 4 142 786
- DE-A1- 19 709 558
- DE-C1- 4 020 180

## Beschreibung

Die vorliegende Erfindung betrifft ein Durchführungsgehäuse nach dem Oberbegriff des Anspruchs 1.

In der industriellen Fertigung werden häufig vorkonfektionierte Kabel zum Verbinden zweier elektrischer Baugruppen miteinander verwendet. Bei solchen Kabeln ist nicht nur ihre Länge vorbestimmt, sondern die elektrischen Leiter der Kabel sind bereits mit Anschlussmitteln versehen, beispielsweise mit Steckern oder Buchsen, oder bei Litzenleitern zumindest mit einer Aderendhülse oder ähnlich. Dadurch ist das miteinander Verbinden der elektrischen Baugruppen mittels des vorkonfektionierten Kabels im Rahmen einer Endmontage sehr schnell möglich.

Oder es wird eine erste der beiden elektrischen Baugruppen modular, insbesondere an einem ersten Fertigungsort, hergestellt und erst während der Endmontage, insbesondere an einem zweiten Fertigungsort, mit der zweiten elektrischen Baugruppe verbunden. Dabei wird ebenfalls bevorzugt ein vorkonfektioniertes Kabel verbaut, das vorzugsweise entweder an die erste oder an die zweite Baugruppe bereits angeschlossen ist.

Die Druckschrift DE 36 19 183 A1 offenbart einen Sicherungs- und Verteilerkasten für Kraftfahrzeuge, der mit einem Vorbau auch ein Wanddurchführungsgehäuse für eine Trennwand des Motorraumes bildet. Im Vorbau ist eine Vielzahl von Aussparungen vorgesehen, in die Kabeldurchführungszugentlastungen zum Durchführen von Kabeln eingesetzt sind. Um einen Kabelstrang an den Sicherungs- und Verteilerkasten anzuschließen, ist es erforderlich, die Abdeckung des Sicherungs- und Verteilerkastens zu lösen. Dies hat sich an sich bewährt, da derart ein sicherer Sitz des Wanddurchführungsgehäuses an der Motorkarosserie sichergestellt wird, bevor die Kabeldurchführungen montiert werden. Allerdings ist das dargestellte Gehäuse nicht dazu geeignet,

Aus der DE 40 20 180 C1 ist es bekannt, an einem Durchbruch eines Gehäuses ein Kabeldurchführungsgehäuse anzubringen, wobei das Kabeldurchführungsgehäuse zweiteilig ausgebildet ist und wobei Kabelschellen zur Zugentlastung dienen und wobei Dichtungen Durchgangsbohrungen des Kabeldurchführungsgehäuses abdecken. Dieses Kabeldurchführungsgehäuse wird mit Kabeln vorkonfektioniert und dann an dem übergeordneten Gehäuse mit dem Durchbruch montiert. Dabei ist problematisch, dass nicht immer ein einwandfreier Sitz des Gehäuses an dem Gehäusedurchbruch sichergestellt ist.

Ein gattungsgemäßes Durchführungsgehäuse für eines oder mehrere Kabel ist auch aus der DE 197 09 558 bekannt. Vor diesem Hintergrund wendet sich die Erfindung von dem Konfektionieren eines Kabeldurchführungsgehäuses und dem anschließenden Montieren an einem Gehäuse mit Durchbruch ab und setzt sich zur Aufgabe, das Kabeldurchführungsgehäuse der DE 36 19 183 so weiterzuentwickeln, dass es flexibler und einfacher handhabbar wird, wobei es aber weiter erst an einem Gehäuse mit einem Durchbruch befestigbar sein soll, bevor es mit Kabeln konfektioniert wird. Dabei sollen aber auch Zugentlastungen und Durchführungsdichtungen nach Art der DE 40 20 180 C1 baulich getrennte Elemente bilden, damit die Funktionen sauber voneinander getrennt sind und hinsichtlich ihrer jeweiligen Aufgabe - Dichtung und Zugentlastung - aus der Materialsicht optimierbar sind.

Aufgabe der vorliegende Erfindung ist es, eine sichere Endmontage und/oder ein nachträgliches Anschließen eines insbesondere vorkonfektionierten Kabels an eine elektrische Baugruppe auf einfache und schnelle Art und Weise zu ermöglichen.

Die Aufgabe wird durch die Merkmale der Patentansprüche 1 und 11 gelöst. Weitere vorteilhafte Ausgestaltungen der Erfindung sind den Unteransprüchen zu entnehmen.

Eine elektrische Baugruppe im Sinne der Erfindung ist beispielsweise ein elektrischer Leiter oder ein einzelnes elektrisches Bauteil oder eine elektrische Schaltung, die vorzugsweise wiederum eine Vielzahl elektrischer Bauteile umfasst, wobei die elektrische Baugruppe zudem ein Gehäuse umfasst. Im Rahmen der Erfindung ist darunter insbesondere ein variabel konfigurierbarer Schaltschrank mit einer oder mehreren elektrischen Schaltungen zu verstehen.

Die Erfindung sieht ein separat gefertigtes Durchführungsgehäuse vor, dass vor einer Endmontage an eine elektrische Baugruppe angeordnet wird. Dafür weist das Durchführungsgehäuse ein Gehäuseunterteil und ein Gehäuseoberteil, welches zum Abdecken des Gehäuseunterteils vorgesehen ist, auf. Zumindest im Gehäuseunterteil sind Ausnehmungen vorgesehen, in denen Kabeldurchführungsdichtungen zum Durchführen von Kabeln angeordnet sind.

Das Gehäuseoberteil ist von einem Offenzustand, in dem es nicht am Gehäuseunterteil festgelegt ist, in einen Geschlossenzustand bringbar, in dem es am Gehäuseunterteil zudem vorzugsweise befestigt ist. Im Offenzustand ist die elektrische Baugruppe durch das Gehäuseunterteil und eine Wanddurchführung, die im Gehäuse der elektrischen Baugruppe angeordnet ist, hindurch zugänglich.

Erfingdungsgemäß sind Befestigungsmittel zum Anbringen des Gehäuseunterteils an die elektrische Baugruppe im Innenraum des Gehäuses vorgesehen, d.h. an einer im Geschlossen-Zustand nicht von außen zugänglicher Stelle des Gehäuses.

Besonders bevorzugt umfassen die Befestigungsmittel wenigstens eine Schraubbohrung und wenigstens eine dazu zugehörige Schraube zum Festschrauben des Gehäuseunterteils an dem Gehäuse, wobei die wenigstens eine Zugentlastung wenigstens eine, mehrere oder sämtliche der Schraubbohrungen mit den darin eingesetzten Schrauben oder Nieten o.dgl. abdeckt.

Derart wird auf einfache Weise sichergestellt, dass das Durchführungsgehäuse an er Wand mit der Durchführung befestigt wird, bevor, die Kabel mit den Zugentlastungen eingelegt werden, können, denn vor der Montage der Kabel müssen zunächst die Schrauben an dem Gehäuse der Baugruppe festgeschraubt werden. Dies stellt einen guten Sitz, insbesondere in Kombination mit einer Dichtung eine gute Abdichtung an dem Gehäusedurchbruch sicher. Damit wird ein besonderer Vorteil gegenüber Lösungen erreicht, bei welchen erst die Kabel an einem Rahmen und diese vorkonfektionierte Anordnung anschließend an einer Wand mit einer Durchführung montiert wird.

Da das Gehäuseoberteil zur Abdeckung des Gehäuseunterteils vorgesehen ist, sind die Wanddurchführung sowie die Befestigungsmittel im Geschlossenzustand durch das Durchführungsgehäuse gegen das Eindringen von Staub und Feuchtigkeit geschützt.

Es ist bevorzugt, dass das Gehäuseunterteil und/oder das Gehäuseoberteil zudem eine weitere Gehäusedichtung umfassen, die den Staub- und Feuchtigkeitsschutz verbessern. Im Gehäuseunterteil ist dabei bevorzugt eine Ringdichtung, im Gehäuseoberteil ein Dichtungsband vorgesehen. Die Ringdichtung ist zwischen dem Gehäuseunterteil und dem Gehäuse der elektrischen Baugruppe angeordnet, das Dichtungsband zwischen dem Gehäuseunterteil und dem Gehäuseoberteil.

Weiterhin ist bevorzugt, dass die Kabeldurchführungsdichtungen dichtend wirken, wohingegen die Zugentlastung die Zugentlastungsfunktion übernimmt und die Zugkräfte, welche auf das Kabelwirken, in das Gehäuse ableiten. Die Zugentlastung weist korrespondierend zu jeder Kabeldurchführungsdichtung jeweils ein Entlastungsmittel auf, so dass sie für jedes Kabel jeweils eine separate Entlastung ermöglicht wird.

Ganz besonders bevorzugt überdeckt die wenigstens eine Zugentlastung in montierter bzw. in das Gehäuse eingesetzten die Befestigungsmittel ganz oder teilweise, so dass diese bei einer nachträglichen Montage unsichtbar oder sogar unzugänglich sind. Dafür weist sie in einer bevorzugten Ausführungsform Abdeckmittel auf. Die nachträgliche Montage ist für den Monteur daher vereinfacht. Die Zugentlastung könnte auch mehrteilig ausgebildet sein.

Bevorzugt weisen die Kabeldurchführungsdichtungen ein Durchgangsloch für das Kabel und einen radialen Schlitz auf, so dass auch vorkonfektionierte Kabel, an denen bereits elektrische Anschlussmittel wie beispielsweise Stecker oder Buchsen vorgesehen sind, durch die Kabeldurchführungsdichtung hindurchführbar und an die elektrische Baugruppe anschließbar sind.
In einer besonders bevorzugten Ausführungsform weist auch das Gehäuseoberteil Ausnehmungen auf, in denen Kabeldurchführungsdichtungen zum Durchführen von Kabeln angeordnet sind. Auch die im Gehäuseoberteil angeordneten Kabeldurchführungsdichtungen wirken bevorzugt dichtend und/oder zugentlastend, und sind vorzugsweise elastisch ausgebildet. Zudem ist auch im Gehäuseoberteil bevorzugt zusätzlich eine Zugentlastung vorgesehen, die für jede im Gehäuseoberteil vorgesehene Kabeldurchführungsdichtung jeweils ein Entlastungsmittel zur Verfügung stellt, mit dem eine separate Entlastung des hindurchgeführten Kabels möglich ist.

Im Geschlossenzustand ist das Gehäuseoberteil bevorzugt in einem Winkel zum Gehäuse der elektrischen Baugruppe vorgesehen. Dadurch kann Feuchtigkeit vom Gehäuse ablaufen und der Feuchtigkeitsschutz ist verbessert.

Die Aufgabe wird weiterhin gelöst mit einer Anordnung aus einer elektrischen Baugruppe und einem solchen Durchführungsgehäuse, wobei das Gehäuseunterteil des Durchführungsgehäuses ortsfest an einem Gehäuse der elektrischen Baugruppe so angeordnet ist, dass es eine Wanddurchführung, die im Gehäuse vorgesehen ist, umgibt.

Das Gehäuseunterteil des Durchführungsgehäuses oder das gesamte Durchführungsgehäuse ist im Rahmen einer Konfektionierung der Anordnung an die elektrische Baugruppe anordbar. Durch Öffnen des Durchführungsgehäuses ist die elektrische Baugruppe zugänglich. Kabel sind daher während der Endmontage oder nachträglich durch Öffnen des Durchführungsgehäuses an die elektrische Baugruppe anschließbar, ohne die elektrische Baugruppe selbst demontieren zu müssen.

Dafür ist es bevorzugt, dass das Gehäuseoberteil unverlierbar am Gehäuseunterteil angeordnet ist, beispielsweise drehbar mittels eines Scharniers.

Die Erfindung schafft zudem die vorteilhafte Anordnung des Anspruchs 13 mit einer besonders einfachen und sicheren Kabelschirmfestlegung und -kontaktierung.
- Fig. 1 a-d: in Fig. 1a ein erfindungsgemäßes Durchführungsgehäuse in einer Explosionsdarstellung, in Fig. 1 b das Durchführungsgehäuse in einem Offenzustand dargestellt, in Fig. 1 c eine Seitenansicht durch das Durchführungsgehäuse gezeigt, und in Fig. 1d einen Schnitt durch die Seitenansicht der Fig. 1 c;
- Fig. 2a-c: schematisch eine Anordnung mit einer elektrischen Baugruppe sowie zwei Durchführungsgehäusen entsprechend der Fig. 1, die an der elektrischen Baugruppe angeordnet sind, wobei die Fig. 2a eine perspektivische Ansicht der Anordnung zeigt, wobei die Fig. 2b eine Draufsicht der Anordnung zeigt, und wobei die Fig. 2c einen Teilschnitt durch die Anordnung zeigt, mit einem angeschlossenen vorkonfektionierten Kabel;
- Fig. 3: eine Seitenansicht eines geöffneten Durchführungsgehäuses;
- Fig. 4a-c: in Fig. 4a eine Draufsicht auf ein Durchführungsgehäuse mit einem vorkonfektionierten Kabel mit einem Steckverbinder; Fig. 4b eine Seitenansicht der Anordnung aus Fig. 4a und Fig. 4c einen Schnitt durch die Anordnung aus Fig. 4b; und
- Fig. 5a,b: in Fig. 5a perspektivische Ansicht einer weiteren Anordnung mit einer elektrischen Baugruppe sowie einem Durchführungsgehäuse, das an der elektrischen Baugruppe angeordnet ist, wobei 5c Draufsicht auf die Anordnung von der dem Durchführungsgehäuse abgewandten Seite zeigt.

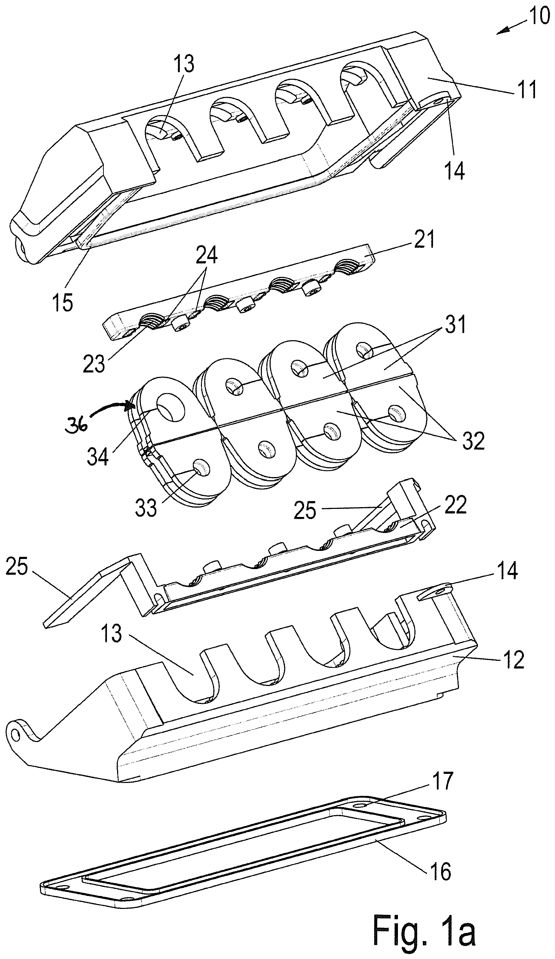

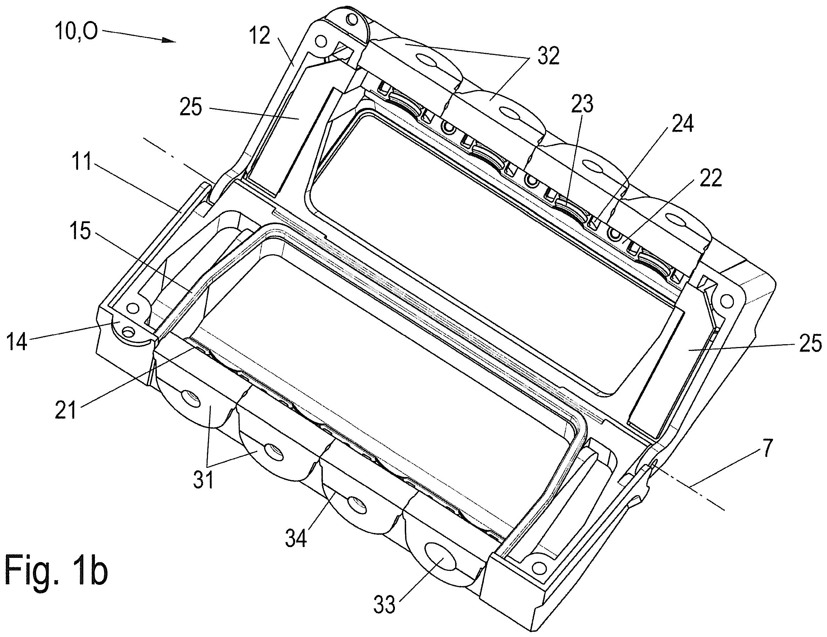

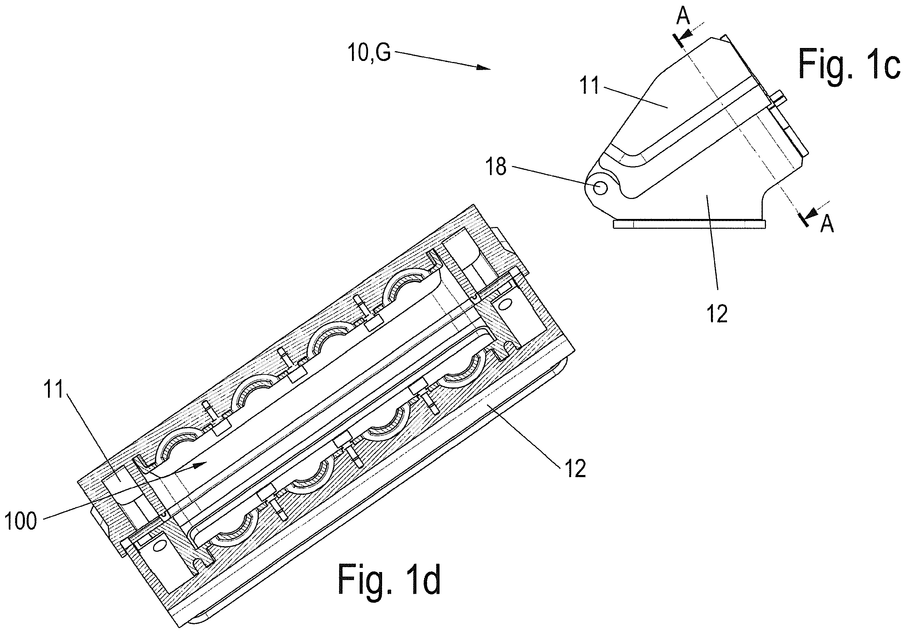

Das Durchführungsgehäuse 10 der Fig. 1 zur Kabeldurchführungsdichtung an einer Wand insbesondere eines übergeordneten Elektronikgehäuses, weist ein Gehäuseoberteil 11 und ein Gehäuseunterteil 12 auf, wobei sowohl im Gehäuseoberteil 11 als auch im Gehäuseunterteil 12 hier mehrere Ausnehmungen 13 zur Aufnahme von Kabeldurchführungsdichtungen 31, 32 vorgesehen sind. Die Kabeldurchführungsdichtungen 31, 32 wirken dichtend. Sie weisen vorzugsweise jedenfalls an einem Teilbereich ihres Außenumfanges eine Nut 36 auf, in welche die Ränder der Ausnehmungen 13 eingreifen. An ihren einander zugewandten Seiten liegen die Kabeldurchführungsdichtungen 31, 32 hier vorteilhaft satt paarweise aneinander.

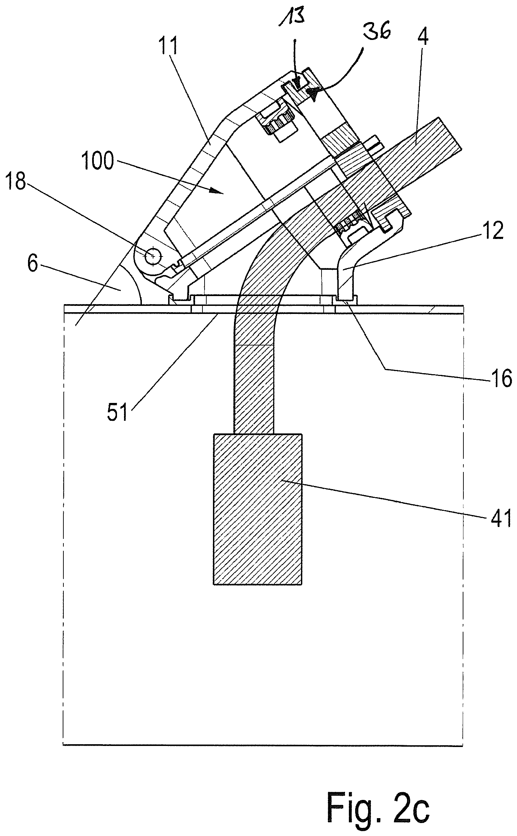

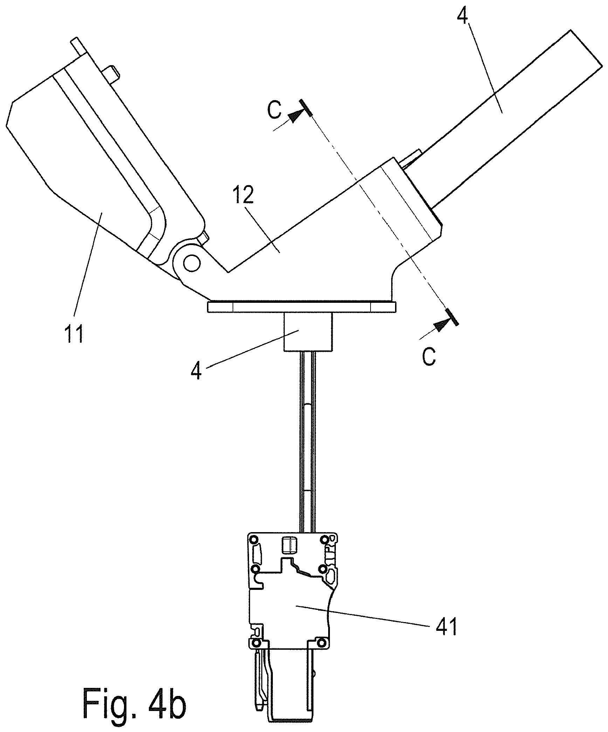

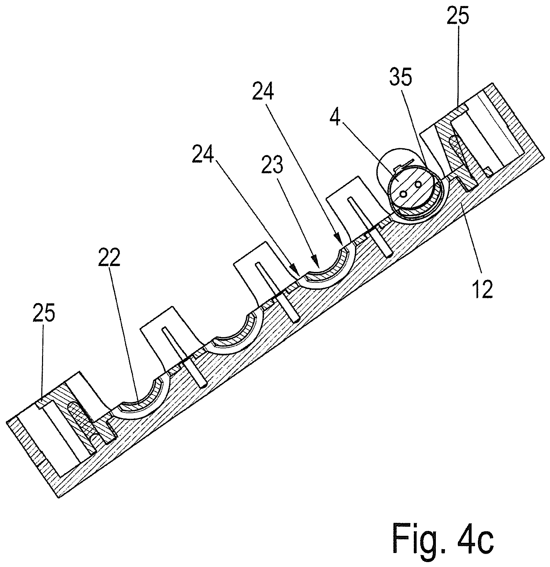

Um durch die Kabeldurchführungsdichtungen 31, 32 hindurch geführte Kabel 4 (s. Fig. 2(c)) auch gegen Zug entlasten zu können, sind sowohl im Gehäuseoberteil 11 als auch im Gehäuseunterteil 12 jeweils Zugentlastungen 21, 22 vorgesehen. Die Zugentlastungen 21, 22 weisen für jede Kabeldurchführungsdichtung 31, 32 jeweils als Entlastungsmittel 23 eine Nut auf. Zudem sind jeweils Durchgangsbohrungen 24 vorgesehen (siehe auch Fig. 4c), durch die für jedes Kabel 4 jeweils ein Kabelbinder 35 durchführbar ist, wobei diese Durchgangsbohrungen an der Nut 23 einen Durchfädelkanal für den Kabelbinder ausbilden. Mit den Kabelbindern 35 ist jeweils eines der Kabel 4 in einer Nut 23 der Zugentlastung festlegbar. Es sind aber anstelle der Kabelbinder auch andere Festlegemittel denkbar, beispielsweise Kabelschellen.

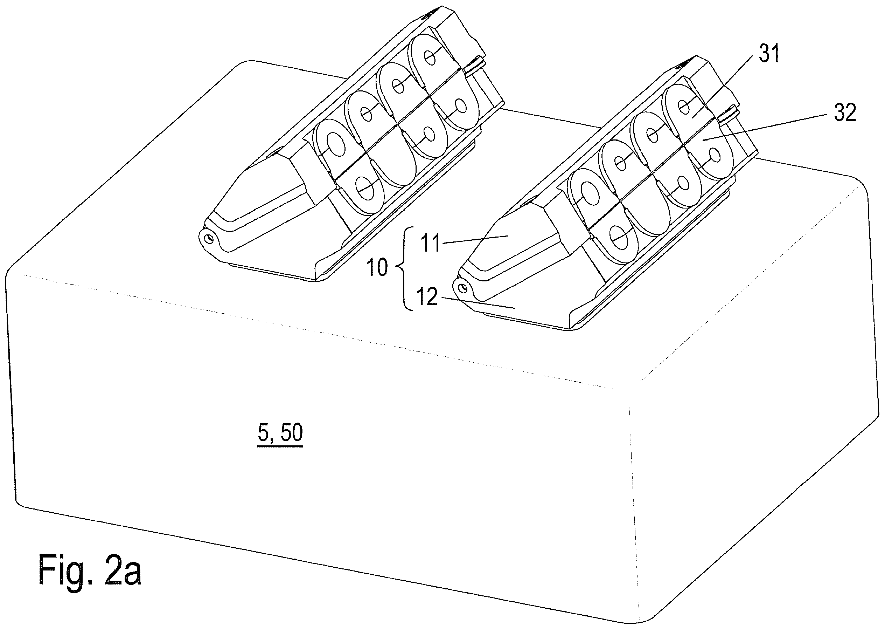

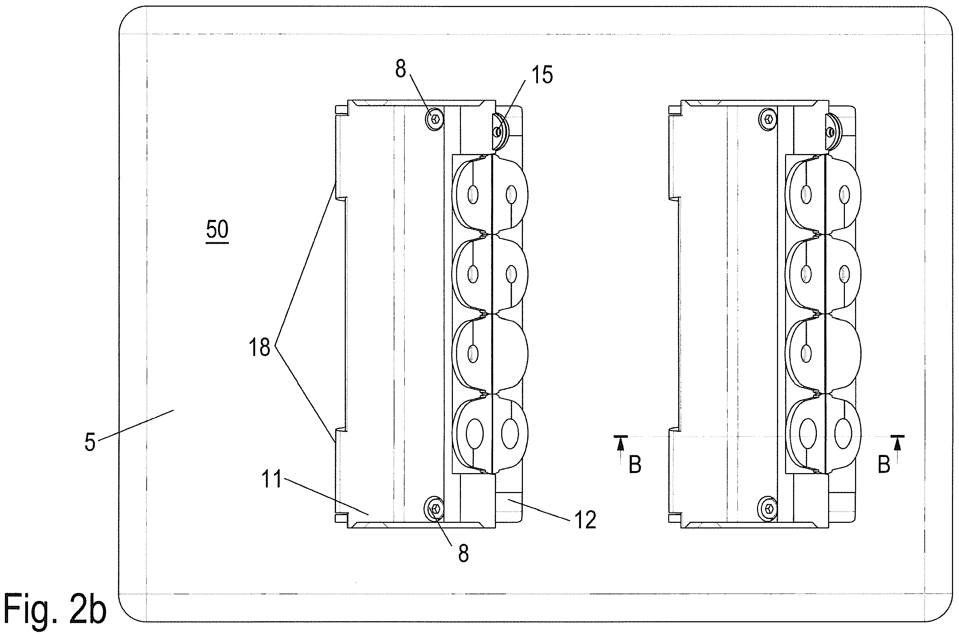

Das Gehäuseoberteil 11 und das Gehäuseunterteil 12 umgeben einen Innenraum 100. Der Innenraum 100 ist ausreichend groß ausgebildet, um eine Wanddurchführung 51 (s. Fig. 2(c)), die in einer elektrischen Baugruppe 5 (s. Fig. 2) vorgesehen ist, zu umranden und abzudecken.

Das Gehäuseoberteil könnte auch rein abdeckungsartig ausgebildet sein und nicht mit Kabeldurchführungsdichtungen versehbar sein (nicht dargestellt)

Um das Eindringen von Staub und Feuchtigkeit durch die Wanddurchführung 51 in die elektrische Baugruppe 5 zu vermeiden, weisen das Gehäuseoberteil 11 und das Gehäuseunterteil 12 jeweils eine Dichtung 15, 16 auf. Im Gehäuseoberteil 11 ist die Dichtung 15 als Dichtungsband ausgebildet und in einem Geschlossenzustand B, in dem das Gehäuseoberteil 11 am Gehäuseunterteil 12 angeordnet ist, zwischen diesen angeordnet. Im Gehäuseunterteil 12 ist die Dichtung 16 als Ringdichtung ausgebildet und zwischen dem Gehäuseunterteil 12 und einem Gehäuse 50 der elektrischen Baugruppe 5 angeordnet.

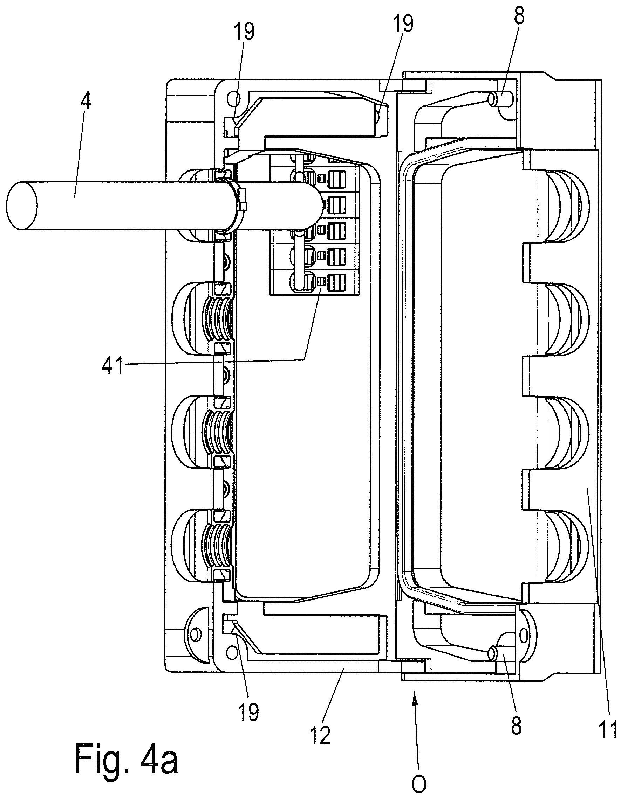

Zum Befestigen des Gehäuseunterteils 12 an die elektrische Baugruppe 5 sind im Innenraum 100 des Durchführungsgehäuses 10 Befestigungsmittel (hier nicht zu erkennen, siehe aber die teilweise abgedeckten Durchführungsöffnungen 19 des Gehäuseunterteils 12 für Schrauben oder Niete oder dgl. In Fig. 4a) vorgesehen, die hier als Dome im Gehäuseunterteil 12 ausgebildet sind. In der Ringdichtung 16, die sich unterhalb der Dome erstreckt, sind ebenfalls Durchgangsbohrungen 17 vorgesehen. Zudem weist auch das Gehäuse 50 Durchgangsbohrungen 19 auf. Durch die Durchgangsbohrungen 17, 19 in der Ringdichtung 16 und in dem Gehäuse 50 (siehe auch Fig. 4a sind beispielsweise Schrauben oder Nieten (nicht gezeigt) hindurchführbar, mit denen das Gehäuseunterteil 12 sehr genau am Gehäuse 50 positionierbar und festlegbar ist.

Das Gehäuseunterteil 12 ist so vorgesehen, dass es die Wanddurchführung 51 im Gehäuse 50 der elektrischen Baugruppe 5 umgibt. Außerdem ist die Ringdichtung 16 ausreichend groß vorgesehen, so dass auch sie die Wanddurchführung 51 umgibt und das Eindringen von Staub und Feuchtigkeit durch die Wanddurchführung 51 in die elektrische Baugruppe 5 sicher verhindert.

Die Fig. 1 (b) und die Fig. 3 und 4 zeigen den Offenzustand O des Durchführungsgehäuses 10. In der hier gezeigten Ausführungsform ist das Gehäuseoberteil 11 um eine Drehachse 7 drehbar am Gehäuseunterteil 12 befestigt.

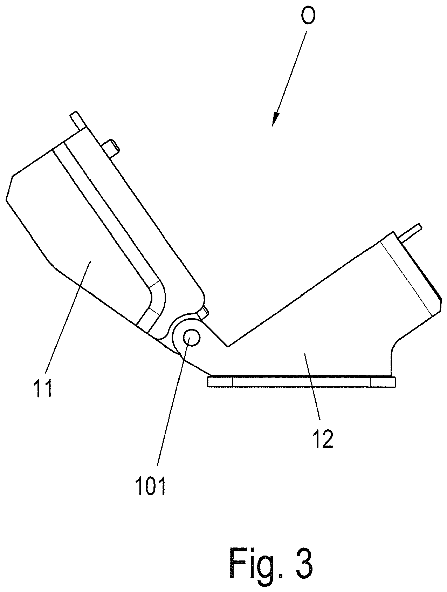

Dafür sind Scharniere 18 (s. Fig. 2(c)), vorzugsweise mit Bolzen 101 (Fig. 3) vorgesehen. Im Offenzustand O ist das Gehäuseoberteil 11 geöffnet, so dass eine elektrische Baugruppe 5 durch das Gehäuseunterteil 11 und die Wanddurchführung 51 zugängig ist.

Es gibt damit keinen Losezustand, in dem eines der Gehäuseteile verlierbar wäre sondern die Gehäuseteile sind vorzugsweise fest aber schwenkbar miteinander unlösbar verbunden.

Die Zugentlastung 22 des Gehäuseunterteils 12 weist stegartige Abdeckmittel 25 auf, die die Befestigungsmittel (Bohrungen 19 nebst Schrauben) ganz oder teilweise überdecken, so dass sie bei einer Endmontage oder einer nachträglichen Montage weiterer Kabel 4 für den Monteur nicht sichtbar sind, und die Montage daher leichter durchführbar ist. Von daher muss das Gehäuseunterteil 12 zwingend vor dem Einlegen der Zugentlastungsdichtungen in das Gehäuseunterteil und der Kabel montiert werden. Die Zugentlastung 22 weist hier in Draufsicht eine U-Form auf, wobei sich die stegartigen Abdeckmittel hier senkrecht zu einem mittleren Steg mit den Nuten 23 erstrecken.

Am Gehäuseoberteil 11 und am Gehäuseunterteil 12 sind zum Plombieren des Durchführungsgehäuses 10 Bohrungen 15 vorgesehen, durch die eine Plombe (nicht gezeigt) hindurchführbar ist. (s. hierzu auch Fig. 2(b)).

Die Fig. 2 zeigt eine Anordnung aus einer elektrischen Baugruppe mit einem Gehäuse 5 mit einer Wand mit hier zwei Wanddurchführungen 51. An der Wand sind hier zwei der Durchführungsgehäuse 10 etwa parallel zueinander angeordnet.
Die Durchführungsgehäuse 10 sind im Geschlossenzustand G gezeigt. Das Gehäuseoberteil 11 und das Gehäuseunterteil 12 sind hier mittels Schrauben 8 lösbar aneinander festgelegt.

In der Fig. 2(c) ist ein vorkonfektioniertes Kabel 4 mit einem an einem freien Ende des Kabels angeordneten Steckverbinder 4a durch eine Kabeldurchführungsdichtung 32 des Gehäuseunterteils 12 und die Wanddurchführung 51 in die elektrische Baugruppe 5 geführt. Die elektrische Schaltung, an die das Kabel 4 beispielsweise mittels eines Steckers 41 angeschlossen ist, ist der Übersichtlichkeit halber nicht gezeigt.

In Figur 2 ist auch die Anordnung des Gehäuseoberteils 11 in einem Winkel 6 relativ zum Gehäuse 50 der elektrischen Baugruppe 5 sichtbar. Diese winkelige Ausbildung des Durchführungsgehäuses 10 vereinfacht ein Anordnen mehrerer Durchführungsgehäuse nahe zueinander an dem Gehäuse 50.

Es ist denkbar, am Gehäuse 50 eine Plombiermöglichkeit wie eine Öse vorzusehen (hier nicht dargestellt): Auch könnte anstelle einer oder mehrerer der Kabeldurchführungsdichtungen eine Art Blindstopfen ohne Schlitz und Bohrung für ein Kabel vorgesehen sein, mit dem ein nicht für ein Kabel benötigter Platz dichtend ausgefüllt würde /ebenfalls nicht dargestellt)..

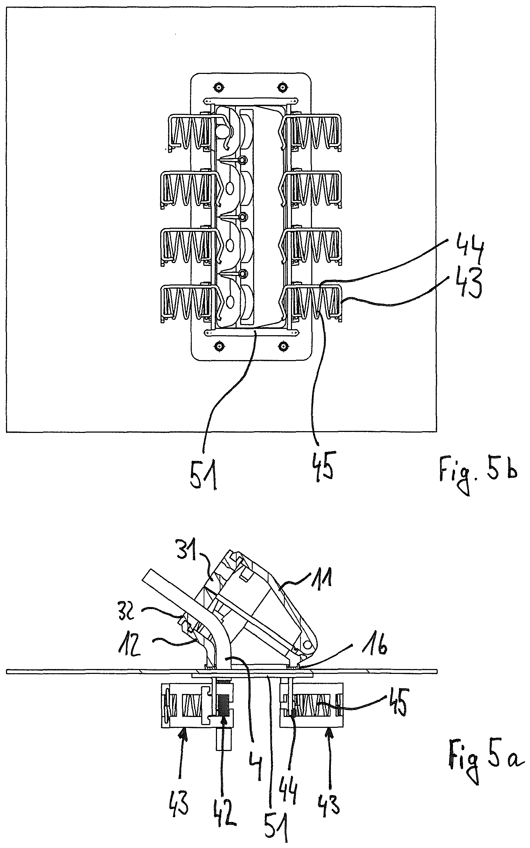

Auch in der Fig. 5 (a, b) ist ein vorkonfektioniertes Kabel 4 durch eine Kabeldurchführungsdichtung 32 des Gehäuseunterteils 12 und die Wanddurchführung 51 in die elektrische Baugruppe 5 geführt. Allerdings weist das Kabel 4 hier keinen oder jedenfalls keinen dargestellten Steckverbinder auf. Das Kabel hat vielmehr ein abgemanteltes Ende, an dem ein (Kabel-)Schirm 42 freigelegt ist. Dieser Schirm 42 des Kabels 4 ist an einem vorzugsweise als Schirmanschlussrahmen ausgebildeten Mittel an einem Schirmanschluss 43 - hier mit einem Bügel 44 und einer Druckfederanordnung 45 - festgelegt ist. Es ist vorzugswiese eine der Anzahl an Kabeldurchführungsdichtungen 32 entsprechende Zahl der Schirmanschlüsse 43 vorgesehen, die an einem leitenden Element wie dem Schirmanschlussrahmen angeordnet sind. Das Element weist vorzugsweise eine geeignete leitende Verbindung zu einem entsprechenden (Schirm-/Masse-)Potential auf (hier nicht im Detail zu erkennen). Das Element kann auch direkt an der Wanddurchführung vorzugsweise innen angeordnet sein.

### Bezugszeichenliste

- 10: Durchführungsgehäuse
- 100: Innenraum
- 101: Gelenkbolzen

- 11: Gehäuseoberteil
- 12: Gehäuseunterteil
- 13: Ausnehmung
- 14: Plombiermittel
- 15: Dichtungsband
- 16: Ringdichtung
- 17: Durchgangsbohrung
- 18: Scharnier
- 19: Durchgangsbohrung

- 21: Zugentlastung des Gehäuseoberteils
- 22: Zugentlastung des Gehäuseunterteils
- 23: Entlastungsmittel, Nut
- 24: Durchgangsbohrung
- 25: Abdeckmittel

- 31: Kabeldurchführungsdichtung des Gehäuseoberteils
- 32: Kabeldurchführungsdichtung des Gehäuseunterteils
- 33: Durchführung
- 34: Schlitz
- 35: Kabelbinder
- 36: Nut
- 4: Kabel
- 41: Anschlussmittel, Stecker, Buchse
- 42: Schirm
- 43: Schirmanschluss
- 44: Bügel
- 45: Druckfederanordnung

- 5: Elektrische Baugruppe
- 50: Gehäuse der elektrischen Baugruppe
- 51: Wanddurchführung
- 52: Durchgangsbohrung

- 6: Winkel
- 7: Drehachse
- 8: Schraube
- O: Offenzustand
- G: Geschlossenzustand

## Patentansprüche

1. Durchführungsgehäuse (10) für eines oder mehrere Kabel, mit einem Gehäuseunterteil (12), welches zum Anordnen an ein Gehäuse (50) ausgelegt ist, und mit einem Gehäuseoberteil (11), welches von einem Offenzustand (L), in dem es nicht am Gehäuseunterteil (12) festgelegt ist, in einen Geschlossenzustand (B), in dem es am Gehäuseunterteil (12) befestigt ist und dieses insbesondere dichtend abdeckt, bringbar ist, wobei zumindest im Gehäuseunterteil (12) wenigstens eine Kabeldurchführungsdichtung (32) zur Aufnahme eines insbesondere vorkonfektionierten Kabels (4) vorgesehen ist, wobei eines oder mehrere Befestigungsmittel zum Anbringen des Gehäuseunterteils (12) an eine elektrische Baugruppe (5) in einem Innenraum (100) des Durchführungsgehäuses (10), d.h. an einer in einem Geschlossen-Zustand nicht von außen zugänglichen Stelle des Gehäuses, vorgesehen sind, **dadurch gekennzeichnet, dass** das Durchführungsgehäuse (10) eine baulich zur Kabeldurchführungsdichtung (32) getrennte Zugentlastung (22) für das Kabel (4) im Innenraum des Gehäuses aufweist.

2. Durchführungsgehäuse (10) nach Anspruch 1, **dadurch gekennzeichnet, dass** die wenigstens eine Zugentlastung das oder die Befestigungsmittel ganz oder teilweise überdeckt, so dass diese - insbesondere im montierten Zustand an dem Gehäuse -unzugänglich sind.

3. Durchführungsgehäuse (10) nach Anspruch 2, **dadurch gekennzeichnet, dass** die Befestigungsmittel wenigstens einen oder mehrere Durchgangsöffnung(en) (19) im Gehäuseunterteil (12) und wenigstens eine dazu zugehörige Schraube oder einen Niet oder dgl. zum Befestigen des Gehäuseunterteils (12) an dem Gehäuse (50) aufweisen, wobei die wenigstens eine Zugentlastung (12) mit wenigstens einem Abdeckbereich wenigstens eine, mehrere oder sämtliche der Durchgangsöffnungen mit den darin eingesetzten Schrauben oder Nieten o.dgl. ganz oder teilweise abdeckt.

4. Durchführungsgehäuse (10) nach einem der vorstehenden Ansprüche, **dadurch gekennzeichnet, dass** auch im Gehäuseoberteil (11) wenigstens eine Kabeldurchführungsdichtung (31) zur Aufnahme eines insbesondere vorkonfektionierten Kabels (4) vorgesehen ist.

5. Durchführungsgehäuse (10) nach einem der vorherigen Ansprüche, **dadurch gekennzeichnet, dass** die Kabeldurchführungsdichtungen (31, 32) wenigstens eine Durchgangsbohrung und einen Schlitz (34) aufweisen.

6. Durchführungsgehäuse (10) nach einem der vorherigen Ansprüche, **dadurch gekennzeichnet, dass** das Gehäuseunterteil (12) und/oder das Gehäuseoberteil (11) eine Dichtung (15, 16) umfassen

7. Durchführungsgehäuse (10) nach einem der vorherigen Ansprüche, **dadurch gekennzeichnet, dass** das Gehäuseunterteil (12) und das Gehäuseoberteil (11) schwenkbar miteinander verbunden sind.

8. Durchführungsgehäuse (10) nach einem der vorherigen Ansprüche, **dadurch gekennzeichnet, dass** das Gehäuseunterteil (12) und das Gehäuseoberteil (11) schwenkbar miteinander derart miteinander verbunden sind, dass sie zwar relativ zueinander verschwenkbar sind, aber nicht vollständig voneinander lösbar sind.

9. Durchführungsgehäuse (10) nach einem der vorherigen Ansprüche, **dadurch gekennzeichnet, dass** das Gehäuseunterteil (12) und das Gehäuseoberteil (11) an einem oder mehrere Gelenkbolzen (100) schwenkbar miteinander verbunden sind.

10. Anordnung aus einer elektrischen Baugruppe (5) und einem Durchführungsgehäuse (10) nach einem der vorherigen Ansprüche.

11. Anordnung nach Anspruch 10, **dadurch gekennzeichnet, dass** das Gehäuseunterteil (12) des Durchführungsgehäuses (10) ortsfest an einem Gehäuse (50) der elektrischen Baugruppe (5) angeordnet ist.

12. Anordnung nach einem der Ansprüche 10 oder 11, **dadurch gekennzeichnet, dass** im Gehäuse (50) eine Wanddurchführung (51) vorgesehen ist, die das Gehäuseunterteil (12) umrandet und abdeckt.

13. Anordnung aus einer elektrischen Baugruppe (5) und einem Durchführungsgehäuse (10) nach einem der Ansprüche 1 bis 10 oder nach dem Oberbegriff des Anspruchs 1, **gekennzeichnet durch** ein Element zum Schirmanschluss, vorzugsweise einen an einer Wanddurchführung (51) angeordneten Schirmanschlussrahmen, der einen oder mehrere Schirmanschlussvorrichtungen aufweist.

## Claims

1. A bushing housing (10) for one or more cables, comprising a lower housing part (12) which is formed for arrangement on a housing (50), and an upper housing part (11) which can be moved from an open state (L), in which it is not fixed to the lower housing part (12), to a closed state (B), in which it is fixed to the lower housing part (12) and covers said lower housing part especially in a sealing manner, wherein at least one cable bushing seal (32) for accommodating an especially prefabricated cable is provided at least in the lower housing part (12), wherein one or several fastening means are provided for the attachment of the lower housing part (12) to an electrical assembly (5) in an interior space (100) of the bushing housing (10), i.e. at a position of the housing which is not accessible from the outside in a closed state, **characterized in that** the bushing housing (10) comprises a strain-relief means (22) for the cable (4) in the interior space of the housing, said strain-relief means being constructively separate from the cable bushing seal (32).

2. A bushing housing (10) according to claim 1, **characterized in that** the at least one strain-relief means covers the single or multiple fastening means entirely or in part, so that they are inaccessible, especially in the mounted state on the housing.

3. A bushing housing (10) according to claim 2, **characterized in that** the fastening means comprise at least one or several passage openings (19) in the lower housing part (12) and at least one screw associated therewith or a rivet or the like for fastening the lower housing part (12) to the housing (50), wherein the at least one strain-relief means (12) partly or fully covers with at least one covering region at least one, several or all passage openings with the screws or rivets or the like inserted therein.

4. A bushing housing (10) according to one of the preceding claims, **characterized in that** at least one cable bushing seal (31) for accommodating an especially prefabricated cable (4) is also provided in the upper housing part (11).

5. A bushing housing (10) according to one of the preceding claims, **characterized in that** the cable bushing seals (31, 32) comprise at least one through-hole and a slot (34).

6. A bushing housing (10) according to one of the preceding claims, **characterized in that** the lower housing part (12) and/or the upper housing part (11) comprise a seal (15, 16).

7. A bushing housing (10) according to one of the preceding claims, **characterized in that** the lower housing part (12) and the upper housing part (11) are pivotably connected to each other.

8. A bushing housing (10) according to one of the preceding claims, **characterized in that** the lower housing part (12) and the upper housing part (11) are pivotably connected to each other in such a way that although they are pivotable relative to each other they are not completely detachable from each other.

9. A bushing housing (10) according to one of the preceding claims, **characterized in that** the lower housing part (12) and the upper housing part (11) are pivotably connected to each other on one or several pivot bolts (100).

10. An arrangement consisting of an electrical assembly (5) and a bushing housing (10) according to one of the preceding claims.

11. An arrangement according to claim 10, **characterized in that** the lower housing part (12) of the bushing housing (10) is arranged in a stationary manner on a housing (50) of the electrical assembly (5).

12. An arrangement according to one of the claims 10 or 11, **characterized in that** a wall passage (51) is provided in the housing (50) which surrounds and covers the lower housing part (12).

13. An arrangement consisting of an electrical assembly (5) and a bushing housing (10) according to one of the claims 1 to 10 or according to the preamble of claim 1, **characterized by** an element for a shielding connection, preferably a shielding connection frame arranged on a wall passage (51) which comprises one or several shielding connection apparatuses.

## Revendications

1. Boîtier de traversée (10) pour un ou plusieurs câbles, avec une partie inférieure de boîtier (12) conçue pour être disposée sur un boîtier (50) et avec une partie supérieure de boîtier (11) qui peut être amenée d'un état ouvert (L) dans lequel elle n'est pas fixée à la partie inférieure de boîtier (12) vers un état fermé (B) dans lequel elle est fixée à la partie inférieure de boîtier (12) et recouvre celle-ci, en particulier de manière hermétique, au moins un joint d'étanchéité de traversée de câble (32) étant prévu au moins dans la partie inférieure de boîtier (12) pour recevoir un câble (4) préparé au préalable, un ou plusieurs moyens de fixation étant prévus pour monter la partie inférieure de boîtier (12) sur un module électrique (5) dans un espace intérieur (100) du boîtier de traversée (10), c'est-à-dire à un endroit du boîtier inaccessible de l'extérieur dans l'état fermé, **caractérisé en ce que** le boîtier de traversée (10) présente une décharge de traction (22) séparée du joint d'étanchéité de traversée de câble (32) pour le câble (4) à l'intérieur du boîtier.

2. Boîtier de traversée (10) selon la revendication 1, **caractérisé en ce que** l'au moins une décharge de traction recouvre entièrement ou partiellement le ou les moyens de fixation de telle manière que ceux-ci soient inaccessibles, en particulier dans l'état monté sur le boîtier.

3. Boîtier de traversée (10) selon la revendication 2, **caractérisé en ce que** les moyens de fixation présentent au moins une ou plusieurs ouvertures de passage (19) dans la partie inférieure de boîtier (12) et au moins une vis correspondante ou un rivet ou similaire pour fixer la partie inférieure de boîtier (12) sur le boîtier (50), l'au moins une décharge de traction (12) couvrant entièrement ou partiellement avec au moins une partie de couverture au moins une, plusieurs ou toutes les ouvertures de passage avec les vis ou rivets ou similaires insérés dedans.

4. Boîtier de traversée (10) selon l'une des revendications précédentes, **caractérisé en ce qu'**au moins un joint d'étanchéité de traversée de câble (31) est prévu aussi dans la partie supérieure de boîtier (11) pour recevoir un câble (4), en particulier préparé au préalable.

5. Boîtier de traversée (10) selon l'une des revendications précédentes, **caractérisé en ce que** les joints d'étanchéité pour traversée de câble (31, 32) présentent au moins un perçage traversant et une fente (34).

6. Boîtier de traversée (10) selon l'une des revendications précédentes, **caractérisé en ce que** la partie inférieure de boîtier (12) et/ou la partie supérieure de boîtier (11) comprennent un joint d'étanchéité (15, 16).

7. Boîtier de traversée (10) selon l'une des revendications précédentes, **caractérisé en ce que** la partie inférieure de boîtier (12) et la partie supérieure de boîtier (11) sont reliées ensemble de façon pivotante.

8. Boîtier de traversée (10) selon l'une des revendications précédentes, **caractérisé en ce que** la partie inférieure de boîtier (12) et la partie supérieure de boîtier (11) sont reliées entre elles de façon pivotante de façon à pouvoir pivoter l'une par rapport à l'autre mais sans pouvoir être complètement détachées l'une de l'autre.

9. Boîtier de traversée (10) selon l'une des revendications précédentes, **caractérisé en ce que** la partie inférieure de boîtier (12) et la partie supérieure de boîtier (11) sont reliées entre elles de façon pivotante sur un ou plusieurs boulons d'articulation (100).

10. Disposition formée d'un module électrique (5) et d'un boîtier de traversée (10) selon l'une des revendications précédentes.

11. Disposition selon la revendication 10, **caractérisée en ce que** la partie inférieure de boîtier (12) du boîtier de traversée (10) est disposée de façon fixe sur un boîtier (50) du module électrique (5).

12. Disposition selon l'une des revendications 10 ou 11, **caractérisé en ce qu'**est prévue dans le boîtier (50) une traversée de paroi (51) qui borde et couvre la partie inférieure de boîtier (12).

13. Disposition formée d'un module électrique (5) et d'un boîtier de traversée (10) selon l'une des revendications 1 à 10 ou selon le préambule de la revendication 1, **caractérisée en ce qu'**elle comporte un élément pour la connexion du blindage, de préférence un cadre de connexion de blindage disposé sur une traversée dans la paroi (51), qui comporte un ou plusieurs dispositifs de connexion du blindage.
